Europäisches Patentamt

(19) European Patent Office

Office européen des brevets

(11) Publication number: **0 234 715 B1**

# EUROPEAN PATENT SPECIFICATION

(45) Date of publication of patent specification: 28.08.91    (51) Int. Cl.⁵: **F02P 5/15, F02P 3/045, F02D 41/14**

(21) Application number: 87300504.5

(22) Date of filing: 21.01.87

(54) Adaptive control system for an internal combustion engine.

(30) Priority: 20.02.86 GB 8604259

(43) Date of publication of application:
02.09.87 Bulletin 87/36

(45) Publication of the grant of the patent:
28.08.91 Bulletin 91/35

(84) Designated Contracting States:
BE DE ES FR GB IT NL SE

(56) References cited:
EP-A- 24 733          GB-A- 2 042 637
US-A- 4 257 377       US-A- 4 319 327
US-A- 4 467 765       US-A- 4 498 438

(73) Proprietor: **LUCAS INDUSTRIES public limited company**
**Great King Street**
**Birmingham, B19 2XF West Midlands(GB)**

(72) Inventor: **Holmes, Michael**
**75 Featherstone Road**
**Kings Heath Birmingham(GB)**

(74) Representative: **Prutton, Roger et al**
**MARKS & CLERK Alpha Tower Suffolk Street**
**Queensway**
**Birmingham B1 1TT(GB)**

## Description

This invention relates to an adaptive control system especially for an internal combustion engine and also to a method of controlling such engine. In an adaptive control system, an output parameter of the engine is monitored and a signal representing that parameter is used to influence, in a desired manner, an input which is controlling the engine.

In operating an internal combustion engine, it is necessary to establish values for various control parameters and, depending upon the particular control parameter, the value of the parameter may be varied continuously in accordance with one or more operating parameters of the engine.

In a spark ignition engine, for each ignition spark or engine fire in one of the engine cylinders, the spark advance angle must be established at the right moment to produce the peak combustion pressure soon after the piston has passed the top dead centre position so as to produce the optimum contribution to the output of the engine. Because the flame speed varies with the density of the air/fuel mixture, it is generally necessary to increase the spark advance angle with decreasing cylinder filling pressure. The spark advance angle must also be increased with increasing engine speed so as to allow for extra rotation of the engine crank shaft whilst the air/fuel mixture burns.

Until recently, the spark advance angle was established by a mechanical device responsive to manifold depression and engine speed. Such a mechanical device establishes the spark advance angle as a simple function of engine speed and load demand as represented by the manifold depression. Careful testing of engines shows that the spark advance angle is a complex function of load and speed and this function cannot be matched by a mechanical device. Modern ignition systems now use empirically derived characteristics for the spark advance angle which are stored as a look-up table in a read only memory.

These spark advance characteristics are determined by testing a number of samples of an engine and establishing an optimum spark advance angle for each load/speed point. A value for the spark advance angle for each point is then chosen which will give good economy subject to meeting various constraints such as low emissions and low knock levels.

Although this provides a much closer match to the optimum spark advance angle than was achieved with the mechanical devices, it still does not give the engine user the best possible spark advance angle for his engine throughout its life. There are a number of reasons for this. It is not possible to test enough engines to provide good statistics and the engines available during tests are often different from production engines. Also, variations in the engine characteristics may occur due to manufacturing tolerances and from small changes in engine design. During the life of an engine, various ageing effects will occur in the engine and in the sensors, actuators and electronic circuitry and these will create a mismatch between the optimum characteristics and those stored in the read only memory.

In US patent 4379333 (see also EP-A-0 024 733), there is described an adaptive control system for controlling the spark advance angle. In this system, small perturbations are superimposed on the spark ignition angle and the resulting changes in engine speed are used to determine the differential or slope of engine output with respect to spark advance angle. Values for the spark advance angle are stored in a read/write memory as a two dimensional array as a function of load demand and engine speed. Each slope value is examined. If it exceeds a predetermined value, depending upon its sign, a fixed quantity is added to, or subtracted from, the spark advance value stored at the nearest array point to the prevailing speed and load demand. A fractional amount of this fixed quantity is also added to, or subtracted from, the surrounding eight array points. The spark advance angle for each ignition spark is determined by interpolation from the values held in the four array points surrounding the prevailing load and speed.

The arrangement described in this patent thus suffers from two disadvantages. Firstly, as a fixed quantity is used to update the values held in the read/write memory, full advantage is not taken of the information available in each slope measurement. Secondly, the method of updating the read/write memory is not symmetrical with the interpolation method used to establish each spark advance angle and so the information available in each slope measurement is not stored to maximum advantage.

Spark advance angle is not the only input parameter which influences the way in which an internal combustion engine performs. The composition of the mixture supplied to the combustion chamber and the timing with which this mixture are supplied are both important. This applies to both diesel and petrol engines. For example, it is known to exercise adaptive control in a petrol engine by monitoring the exhaust gases with an oxygen sensor and to use this measurement as an indication of the actual air/fuel ratio of the mixture supplied to the combustion chamber. This value is then compared with a predetermined demanded value of air/fuel ratio stored in a two-dimensional look-up table in a read-only memory addressed by engine speed and load demand. This air/fuel ratio is determined by interpolation from the values held in the four array points surrounding the prevailing engine speed and load demand. The error derived from the comparison is used to adjust a correction memory by changing the array point nearest to the prevailing engine speed and load demand. This arrangement suffers from the disadvantage that the method of updating the correction memory is not symmetrical with the interpolation method used to establish the air/fuel ratio and so the information available in each measurement is not stored to maximum advantage.

It is an object of this invention to provide a new or improved adaptive control system for an internal combustion engine and also a method of controlling such an engine in which the above mentioned disadvantages are overcome or reduced.

According to a first aspect of this invention there is provided an adaptive control system for an internal combustion engine, said control system comprising:

means for determining the engine speed;

means for determining the load demand to which the engine is subjected;

means for determining a basic value or a series of basic values for a particular engine control parameter in accordance with a fixed schedule;

a correction schedule in which correction values for said particular control parameter are stored as a two dimensional array as a function of engine speed and load demand;

means for providing a calculated correction value for the prevailing engine speed and load demand, said means multiplying each of the correction values stored in the correction schedule at the four array points in the speed/load plane which surround the prevailing engine speed and load demand by a respective weighting factor to provide product values and then summing the four product values to produce a calculated correction value;

means for determining a command value for said particular control parameter by summing a respective basic value and a respective calculated correction value; and

means for updating the values stored in the correction schedule,

said weighting factors being determined by forming a main rectangle whose corners lie on the four array points surrounding the prevailing speed and load demand, dividing said main rectangle into four sub-rectangles by the ordinate and abscissa which pass through the prevailing speed and load demand point, and calculating the weighting factor for each array point in dependence upon the area of the diagonally opposite sub-rectangle, characterised by said updating means producing a series of error values, multiplying each error value by a respective weighting factor for each of the four array points which surround the prevailing engine speed and load demand to form four product values and using said four product values to update the correction values stored at said four array points.

In the system of the present invention, for each slope measurement, the four array points surrounding the prevailing speed and load demand are updated by using appropriate weighting factors. Thus, full advantage is taken of the information present in each error value.

Conveniently, the weighting factor for each array point is calculated by dividing the area of the diagonally opposite sub-rectangle by the area of the main rectangle.

Preferably, the updating means updates the correction value stored at each array point by multiplying a respective product value by a constant and adding the resulting value to the correction value presently stored at the array point.

By updating the correction values in this way, the noise component in the slope measurements is filtered out.

Conveniently, the fixed values for said particular control parameter are stored in said fixed schedule as a two dimensional array as a function of engine speed and load demand, and each basic value of said particular control parameter is determined from the value stored at the four array points in the speed/load plane which surround the prevailing speed and load demand, said particular control parameter at each point being multiplied by a respective weighting factor to form a product value and the four product values being summed to produce the basic value, said weighting factors being determined in the same manner as for the correction schedule.

Preferably, the system further comprises means for determining a series of values for the slope of engine output with respect to a certain engine control parameter, each such value corresponding to the prevailing engine speed and load demand, said certain and particular parameters being the same parameter or different parameters, and said updating means comparing each slope value with a predetermined value to produce said series of error values.

In a preferred embodiment of the present invention, the internal combustion engine has a flywheel connected through resilient shafting and a gear arrangement to a load, said flywheel, resilient shafting and gear arrangement forming a resonant system which has a particular resonant frequency for each gear ratio established by said gear arrangement, and the system further includes a position transducer for detecting the passage of the engine crankshaft past at least one reference point during each engine fire period, and said slope determining means comprises:

a perturbation generator for generating a periodic perturbation waveform, said perturbation generator producing a positive perturbation value for said certain control parameter during the first part of each period of the perturbation waveform and a negative perturbation value for said certain control parameter during the second part of each period of the perturbation waveform, each period of said waveform being equal to a whole number of engine fire periods and the frequency of said waveform being greater than three quarters of the highest resonant frequency of said resonant system;

means for creating at least one series of contiguous positive and negative measurement windows associated with respective first and second parts of each period of said perturbation waveform, eachmeasurement window lagging its respective part of a period of the perturbation waveform by a predetermined phase shift;

a first accumulator for accumulating for each positive measurement window the individual fire periods whose central points fall within said positive window to produce a total fire period for said positive window;

a second accumulator for accumulating for each negative measurement window the individual fire periods whose central points fall within said negative window to produce a total fire period for said negative window; and

means for calculating a series of values for the slope of engine output with respect to said certain control parameter from said total fire periods accumulated in said first and second accumulators.

According to a second aspect of this invention, there is provided a method of determining a series of command values for a particular control parameter for an internal combustion engine, said method comprising determining the engine speed, determining the load demand to which the engine is subjected, determining a basic value or a series of basic values for said control parameter in accordance with a fixed schedule, providing a correction schedule in which correction values for said particular control parameter are stored as a two-dimensional array as a function of engine speed and load demand, providing a calculated correction value for the prevailing engine speed and load demand by multiplying each of the correction values stored in the four array points in the speed/load plane which surround the prevailing engine speed and load demand by a respective weighting factor to produce a product value and summing the four product values to produce the calculated correction value, summing a respective basic value and a respective calculated correction value to produce a command value for said particular control parameter, and updating the values stored in the correction schedule by producing a series of error values representative of the effects of successive command values on the engine, multiplying each error value by a respective weighting factor for each of the four array points surrounding the prevailing engine speed and load demand to form four product values for each of the series of error values, and using said four product values to update the correction values stored at said four array points, said weighting factors used in calculating the calculated correction value and updating the stored values being determined by forming a main rectangle whose corners lie on the four array points surrounding the prevailing speed and load demand, dividing said main rectangle into four sub-rectangles by the ordinate and abscissa which pass through the prevailing speed and load demand point, and calculating the weighting factor for each array point in dependence upon the area of the diagonally opposite sub-rectangle.

This invention will now be described in more detail, by way of example, with reference to the drawings in which:-

Fig 1 is a diagram of the functional components of an adaptive control system embodying this invention;

Fig 2 is a graph illustrating the phase lag between a perturbation waveform and the resulting change in engine speed as a function of perturbation frequency;

Fig 3 is a graph of engine speed as a function of crankshaft angle;

Fig 4 is a block diagram of a microcomputer arrangement which implements the functional components of Figure 1;

Fig 5 is a layout diagram of the computer program forming part of the control system of Figure 4;

Fig 6 is a diagram illustrating the calculation of weighting factors used in the program;

Figs 7 to 11 form a flow chart of part of the program; and

Figs 12 to 13 show a modification to the flow chart.

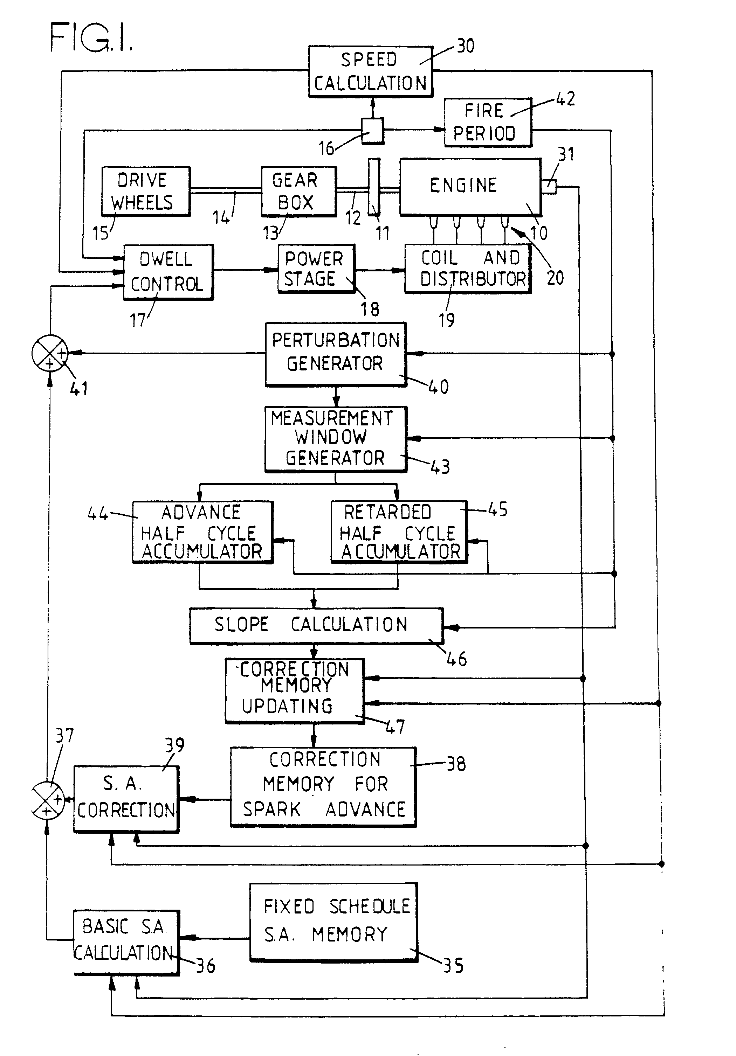

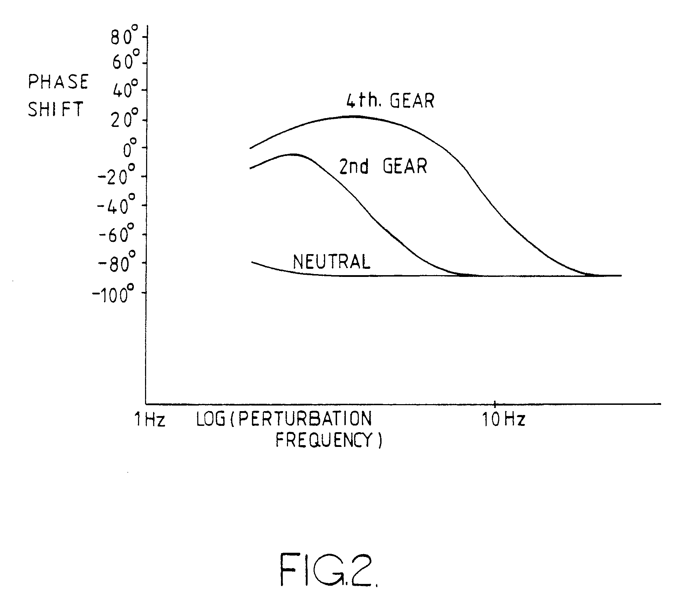

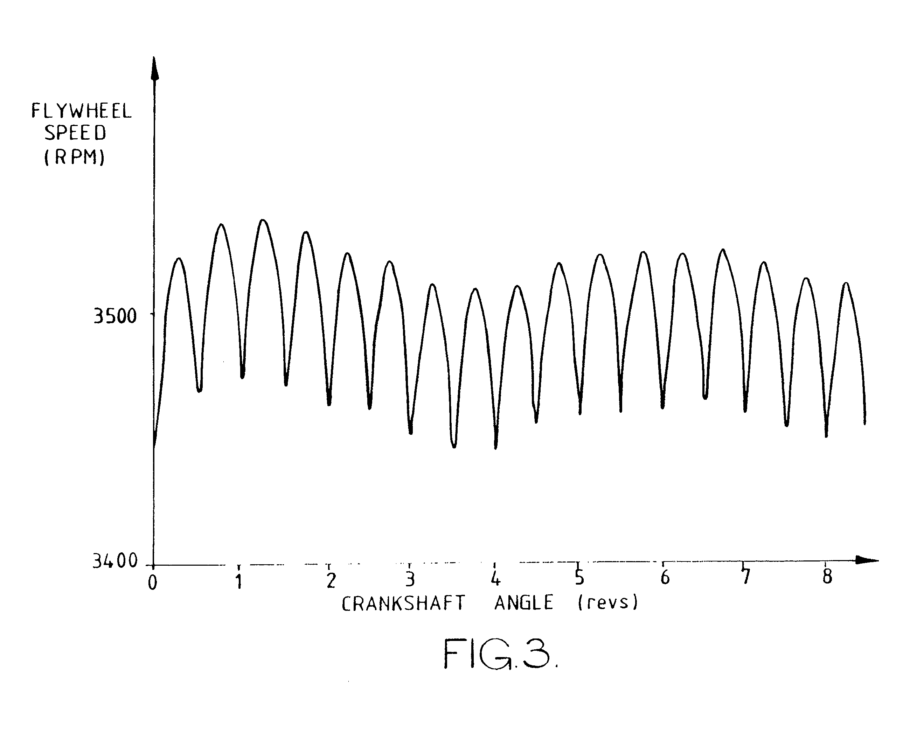

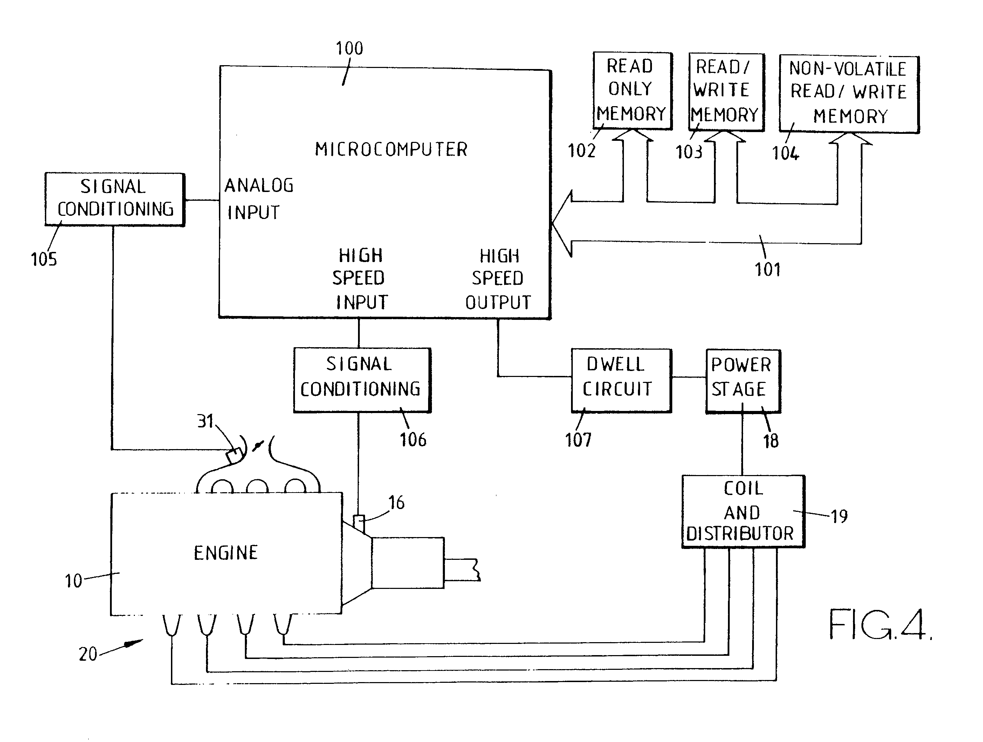

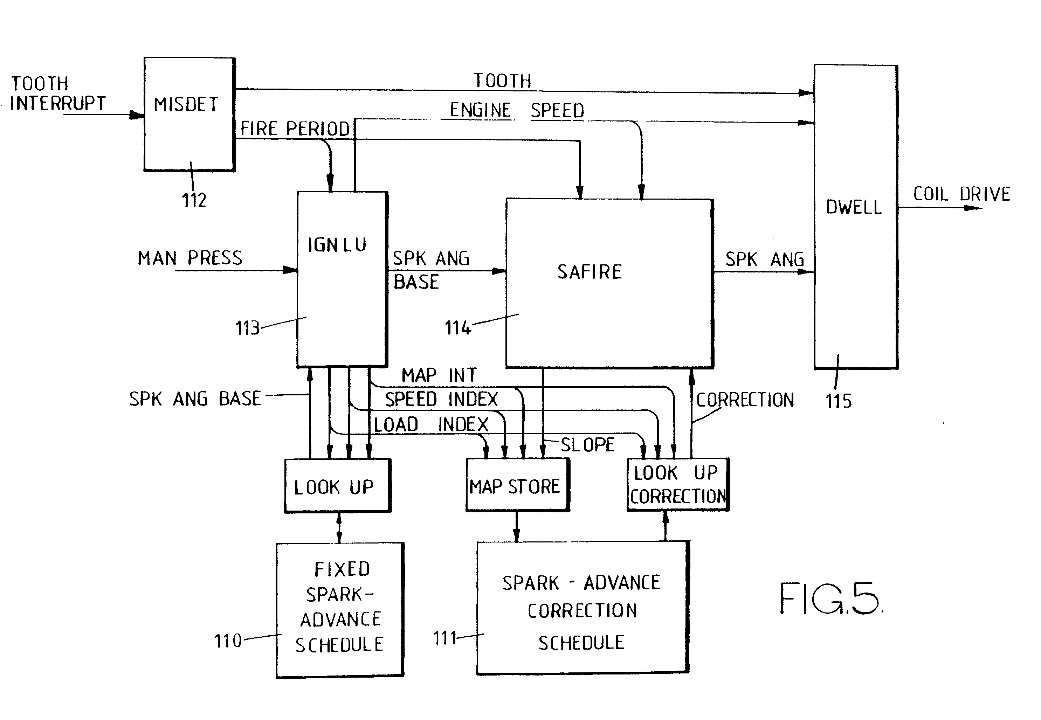

Referring now to Figure 1, there is shown in functional form an adaptive control system embodying this invention and installed in a motor vehicle. The control system comprises a four cylinder spark ignition internal combustion engine 10 which is provided with a flywheel 11. The engine 10 is installed in a vehicle and is connected through a resilient shaft 12, a gear box 13, and a further resilient shaft 14 to drivewheels 15 which form a load. Although not shown, a clutch is also provided.

The flywheel 11 is associated with a position transducer 16 which produces a reference pulse for each 180° of rotation of the engine crankshaft. Each pulse is produced when the piston in the cylinder executing an expansion stroke is at 30° after the top dead centre position. The pulses from transducer l6 are supplied to a dwell control means l7, the output of which is connected through a power stage l8 to a coil and distributor l9. The coil and distributor l9 is connected to four spark ignition plugs 20 and causes ignition sparks to occur in these plugs at appropriate moments.

The output of transducer l6 is also supplied to a speed calculation means 30 which calculates engine speed and supplies this to the dwell control means l7.

The engine is provided with a transducer 3l which measures the load demand to which the engine is subjected. In the present example, the transducer 3l measures the pressure in the inlet manifold for the engine cylinders. The load demand could also be detected by measuring other quantities such as the throttle valve opening position or the rate of air flow into the inlet manifold.

The system also includes a memory 35 in which is stored a two dimensional array of spark advance angles, the abscissa and ordinate of the array corresponding to engine speed and load demand. The memory 35 and the speed calculation means 30 and transducer 3l are connected to a calculation means 36. For each prevailing engine speed and load demand, the calculation means 36 calculates a basic value for spark advance and supplies this to one input of a summer 37. The calculation means 36 calculates this basic value from the spark advance values stored in the array in memory 35 at the four points in the speed/load plane surrounding the prevailing engine speed and load demand. Each of these values is multiplied by an appropriate weighting factor and the four resulting values are added to provide the basic spark advance value. Thus, the calculation means 36 calculates the basic spark advance value by interpolation. The spark advance values are stored in memory 35 at a density which provides a good match for the irregularities of the true optimum spark advance characteristics of the engine l0.

The spark advance values in memory 35 take the form of a fixed schedule which is established from rig-tests on sample engines. For the various reasons which have been outlined above, the optimum spark advance values will differ from those stored in memory 35. As will shortly be described in detail, the system imposes small positive and negative perturbations on the spark advance value and senses the change in engine output speed which these cause. From the change in engine speed, correction values are stored in a correction memory 38. These correction values are also stored as a two dimensional array in which the abscissa and ordinate represent engine speed and load demand and they are stored with the same density as the values stored in memory 35.

For the prevailing engine speed, a correction value is calculated in a correction value calculation means 39 and supplied to a second input of summer 37. The calculation means 39 receives the outputs of speed calculation means 30 and load demand transducer 3l and calculates the correction value for the prevailing engine speed from the values stored in memory 38 by using the same interpolation method as that used by the calculation means 36.

The perturbation values are determined in a perturbation generator 40 and supplied to an input of a summer 4l. The other input of summer 4l receives the output of summer 37, and the output of summer 4l is supplied to the dwell control means l7 as a command value for the spark advance. The dwell control means l7 uses the output of the speed calculation means 30 and position transducer l6 to ensure that ignition sparks occur at the commanded spark advance values.

Because ignition sparks occur intermittently in the spark ignition engine, the torque output of engine l0 fluctuates during each engine cycle. In order to smooth these fluctuations, the flywheel ll is provided and it converts the fluctuations in torque into small accelerations and decelerations. The resilient nature of shafts l2 and l4 prevent these small accelerations and decelerations from causing changes in the speed of drivewheels l5.

The flywheel ll, shafts l2 and l4, and the gear box l3 form a resonant system. The resonant frequency varies with the gear ratio established in the gear box l3. In the present example, the system has a resonant frequency of 4Hz in second gear and 9Hz in fourth gear.

Every single perturbation in the spark advance angle causes a change in output torque produced by engine l0. In view of the resonant nature of flywheel ll and shafts l2 and l4, the resulting change in the speed of flywheel ll has two components. The first of these components is a damped ringing response at the appropriate resonant frequency and, in the particular engine mentioned above, the ringing decays with a time constant of 0.3 seconds. The second component is the longer term response which is associated with the new steady state which arises when the change in resistance forces caused by the change in vehicle speed match the change in torque from the engine. With the particular engine discussed above, this second component has a time constant of 7 seconds in fourth gear.

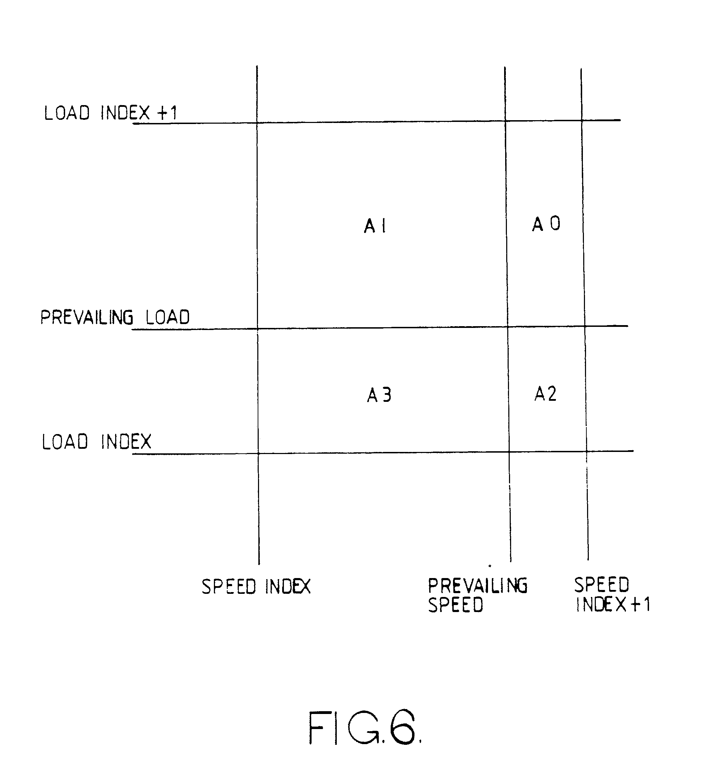

In order to measure the slope of engine output with respect to spark advance as quickly as possible, the first part of the response should be used to calculate the slope. It is also desirable to provide a system which will work in any gear and which will provide comparable results in the different gears without knowledge of which particular gear is engaged. In Figure 2, there is shown a graph of the phase shift between a perturbation wave form generated by perturbation generator 40 and the resulting change in engine speed as a function of perturbation frequency for fourth gear, second gear and neutral. As may be seen, the phase shift changes rapidly with frequency in the region below 9Hz and there are also large differences between the phase shift in the different gears. In contrast, in the region above l0Hz, the phase shift changes slowly with frequency and the differences in phase shift in the different gears are small. With increasing frequency, for all gears the phase shift approaches the 90° phase shift obtained when neutral is engaged. In order to provide comparable results in the different gears, it is therefore preferred that the perturbation frequency produced by perturbation generator 40 is greater than the highest resonant frequency of the resonant system formed from flywheel Il, shafts I2 and I4 and gear box I3. In the present case, this means the perturbation frequency should be greater than 9Hz which is the resonant frequency in fourth gear. However, in other engines, the phase changes below the resonant frequency may be smaller than those shown in Figure 2 and it is anticipated, that for some engines satisfactory results could be obtained with a perturbation frequency equal to or greater than three quarters of the highest resonant frequency.

There is a further restraint on the perturbation frequency produced by perturbation generator 40. Perturbations in the spark advance value can only take effect at the moments when ignition is initiated. In the case of a four cylinder engine, this occurs twice for each revolution of the crank shaft. Therefore, the perturbation frequency cannot take a fixed value. Therefore, perturbation generator 40 generates a two level waveform at a frequency which is greater than a minimum frequency, such as the resonant frequency or three quarters of the resonant frequency, and with a period which is equal to a whole number of fire periods of engine I0. During the first part of each period, the perturbation generator 40 sets the perturbation value so as to cause a small increase in the spark advance angle and, in the second part of each period, it sets the perturbation value so as to cause a small decrease in the spark advance angle.

The output of position transducer I6 is supplied to a fire period calculating means 42 which calculates each fire period. Position transducer I6 produces a reference pulse when the respective piston is at 30° after top dead centre. Thus the actual period calculated is the period which elapses between these pulses. The fire period is supplied to the perturbation generator 40 and also to a measurement window generator 43, an advance half cycle accumulator 44, a retarded half cycle accumulator 45, and slope calculation means 46.

The measurement window generator 43 receives the waveform from perturbation generator 40 and creates a series of contiguous positive and negative measurement windows, each of which corresponds to a respective first part or second part of a period of the perturbation wave form. The measurement windows are shifted in phase from the perturbation waveform by an amount which is a compromise of the actual phase shifts which occur in the various gears between the perturbation waveform and the engine response. These actual phase shifts have been described with reference to Figure 2. In the present example, this phase shift is 72° which is 0.2 of a perturbation cycle. The positive and negative measurement windows are supplied respectively to the advance and retarded half cycle accumulators 44 and 45.

Referring now to Figure 3, there is shown the variation in the speed of flywheel Il as a function of crankshaft angle. As may be seen, during each engine cycle severe fluctuations occur. There is therefore a danger that the severe fluctuations in engine speed could confuse measurements of the change in engine speed caused by the perturbations to the spark advance angle. In order to avoid this danger, the engine speed is sensed by measuring the period for whole engine fires only. Specifically, engine fire periods whose central points fall in the positive and negative measurement windows are accumulated respectively in the advance and retarded half cycle accumulators 44 and 45.

As mentioned above, the slope of engine output with respect to spark advance is calculated in the slope calculation means 46. Following each measurement window, the average engine speed during that window is measured from the accumulated fire periods. Following each positive measurement window, the effect of the transition from the part of the period in which the spark advance angle was decreased to the part of the period in which it was increased is evaluated by subtracting the average speed during the negative measurement window from the average speed during the positive measurement window. Similarly, at the end of each negative measurement window, the effect of the transition from the part of the period in which the spark advance was increased to the part of the period in which it was decreased is evaluated by subtracting the average speed during the positive measurement window from that during the subsequent negative measurement window. Thus, these two transition values are evaluated alternately. These two transition values reflect both the change in torque generated by the perturbations and also the change in speed due to any acceleration or deceleration which is caused, for example, by movement of the accelerator by the driver or by changes in resistance forces or road gradient. In order to eliminate the effect of acceleration or deceleration from the slope measurement, the slope is then evaluated by subtracting the transition value associated with changing the perturbation from an increased value to a decreased value from the transition value associated with changing the perturbation from a decreased value to an increased value.

The curve relating torque output to spark advance has a single maximum at which the slope of engine output with respect to spark advance will be zero. As will be explained, in the present example the spark advance angle is corrected with the intention of achieving this maximum. However, in some engines under high load, the spark advance angle which causes maximum output may also permit knocking to occur. Also, in some engines, the maximum may be associated with undesirable exhaust emissions. Therefore, for some engines, it may be required to vary the spark advance until the slope reaches a predetermined value other than zero.

For greater accuracy under conditions where the spark advance is controlled to achieve a non-zero value of the slope, it would be better to measure actual torque rather than torque derived from speed measurement. However, due to the inconvenience of torque measurement, it is preferred to measure speed and compensate for variations between measured speed and torque, for example, by calculating engine output as an appropriate function of engine speed.

The slope calculated by the slope calculation correction means 46 is supplied to correction memory updating means 47. The means 47 also receive the engine speed and load demand from the speed calculation means 30 and load transducer 3l. For each slope measurement, the updating means 47 updates the values stored in memory 38 for each of the four array points surrounding the prevailing engine speed and load demand. Specifically, for each array point a new correction is calculated and stored from the old correction in accordance with the following formula:-

new correction =
old correction + $k_1$ × (weighting factor) × (slope)

where $k_1$ is a constant.

This formula corrects the values in the memory 38 from the slope measurements by integration and smoothes out the noise component in the slope measurements. The constant $k_1$ should be chosen so as to be small enough to reduce these noise components to a low level but large enough to provide rapid convergence to the optimum spark advance angle. The weighting factor given in this formula is the same as the weighting factor used by the correction means 36 and 39. The method of calculating the weighting factor will be described in detail below.

As the density of array points in the memory 35 is chosen to give a good match with the optimum spark advance characteristics, the information in the slope measurements will represent a mismatch which has occurred between the actual optimum characteristics and those stored in the memory 35. It is therefore reasonable to update memory 38 by a process which is symmetrical with the interpolation process used to derive the spark advance angle and the formula given above achieves this. Furthermore, in the formula given above, the values stored in memory 38 are corrected in proportion to the magnitude of each slope measurement and so maximum advantage is taken of the information present in each slope measurement.

The combination of the rapid method of making slope measurements which is achieved by using the first component of the engine speed response and the formula given above for updating memory 38 will permit the spark advance angle to be corrected to its true optimum value for the complete range of engine speed and load demands in approximately six hours of driving a motor vehicle in mixed road conditions. Although this represents a considerable improvement over prior art arrangements, it is relatively long compared with the average time for each operation of an engine. In view of this, it is preferred that memory 38 is of a non-volatile construction. By using such a construction, the corrections are restored between periods of engine operation. Thus, memory 38 contains a complete schedule of updated corrections addressed by engine speed and load demand.

Two further refinements to the formula given above for updating memory 38 will now be described.

In addition to the mismatch in the spark advance angle for the prevailing speed and load demand, each slope measurement may also contain information which refers to the whole speed/load demand plane. For example, there may be a mismatch for spark advance across the entire plane due, for example, to changes in barometric pressure or in the composition of fuel. In order to take advantage of this information, each slope measurement may be used to update all the correction values in memory 38 in accordance with the following formula:-

new correction = old correction + $k_2$ × (slope)

Alternatively, this formula may be used to update a single value which is added at summer 37 to the correction value calculated by calculation means 39.

The constant $k_2$ is of course much smaller than the constant $k_1$ mentioned above. However, the constant $k_2$ must be chosen to be large enough to give convergence for changes in variables such as a barometric pressure in a few minutes across the entire load/speed plane.

The second refinement enables the entire spark advance characteristics to be tilted and this may be required, for example, when the position transducer 16 is poorly calibrated or subject to drift. With this second refinement, four offset correction values are stored in an additional memory corresponding to the four corners of the speed/load plane. Each slope measurement is then used to update these four values by multiplying the slope by an appropriate weighting factor and an appropriate constant. In calculating each correction value, these four offset values are then multiplied by appropriate weighting factors and the resulting value is added to the value calculated from the four array points surrounding the prevailing engine speed and load demand.

The various functional blocks shown in Figure 1 are implemented using a microcomputer arrangement and this arrangement is shown in Figure 4.

As shown in Figure 4, the microcomputer arrangement comprises an Intel Corporation 8097 microcomputer 100 which is connected via a data and address bus 101 to a type 27C64 read only memory 102, a Hitachi type 6116 read/write memory 103, and a Greenwich Instruments Limited type NVR2 non-volatile read/write memory 104. The program and fixed schedules are stored in memory 102, temporary variables are stored in memory 103, and the corrections for the spark advance angle are stored in memory 104.

The microcomputer arrangement implements the speed calculation means 30, the fire period calculation means 42, the perturbation generator 40, the measurement window generator 43, accumulators 44 and 45, slope calculation means 46, updating means 47, the memories 35 and 38 together with the calculation means 36 and 39, summers 37 and 41 and part of dwell control means 17.

The load demand transducer 31 is connected through a conventional signal conditioning circuit 105 to an ANALOG input of microcomputer 100. The position transducer 16 is of the variable reluctance type and coacts with a toothed wheel mounted on the engine crankshaft and from which teeth have been removed to establish the required reference positions. Transducer 16 is connected through a signal conditioning circuit 106 to a HIGH SPEED input of microcomputer 100.

A HIGH SPEED output of microcomputer 100 is connected to the input of a dwell control circuit 107. The dwell control circuit 107 together with part of the program stored in memory 102 perform the function of the dwell control means 17 of Figure 1. The dwell control circuit 107 is a type L497 dwell control circuit supplied by S. G. S. Limited. The dwell control circuit 107 initiates the build up of current in the primary winding of the ignition coil at the correct moment to achieve the required level just before the current is interrupted. The dwell control circuit 107 also limits the coil current to the required level during the short period which elapses between achieving the required current and the current being interrupted. The output of dwell control circuit 107 is connected to the power stage 18 which, as mentioned with reference to Figure 1, is connected to the input of the coil and distributor 19.

Referring now to Figure 5, there is shown the general arrangement of the modules which form the program and also the flow of data between these modules. The program comprises the modules MISDET 112, IGNLU 113, SAFIRE 114, and DWELL 115. The module IGNLU calls a sub-module LOOK UP and the module SAFIRE calls sub-modules MAP STORE and LOOK UP CORRECTION. Figure 5 also shows a fixed spark-advance schedule 110 which contains the fixed spark advance values and which corresponds to memory 35 shown in Figure 1. Figure 5 further shows a spark-advance correction schedule 111 which contains the correction values for spark advance and corresponds to memory 38 shown in Figure 5.

The module MISDET receives an interrupt signal TOOTH INTERRUPT and this module is executed each time a tooth is detected. A variable TOOTH is supplied to the module DWELL and represents the position of the crankshaft to within one tooth of the transducer 16. This module MISDET compares the period between each tooth and thereby detects the missing teeth. When a missing tooth is detected, this module re-establishes the relationship between the variable TOOTH and absolute position of the crankshaft. The module MISDET also calculates the fire period and supplies this as a variable FIRE PERIOD to the modules IGNLU and SAFIRE.

The module IGNLU receives a variable MAN PRESS representing manifold pressure which is indicative of the load demand. The variable MAN PRESS is derived from the output signal of transducer 31 by an analog/digital converter which forms part of microcomputer 100. The module IGNLU also calculates a variable ENG SPEED representing engine speed and supplies this to SAFIRE and DWELL.

In each of the schedules 110 and 111, the spark

advance values are stored as a l6 × l6 array. In each array, the abscissa and ordinate correspond respectively to engine speed and load demand and the abscissa and ordinate are divided respectively into l6 discrete engine speed and load demand values. Thus, each array point contains the spark advance value for one of the discrete engine speed and one of the discrete load demand values.

In order to address the schedules ll0 and lll, the module IGNLU generates address variables SPEED INDEX and LOAD INDEX corresponding respectively to engine speed and load demand. Each of these address variables can assume any one of values 0 to l5 corresponding to the lower l6 discrete engine speed and load demand values. These variables are set to the value corresponding to the engine speed and load demand immediately below the prevailing speed and load demand. The address variables SPEED INDEX and LOAD INDEX are supplied to the sub modules LOOK UP, MAP STORE, and LOOK UP CORRECTION.

The module IGNLU also calculates four variables MAP INT 0 to 3 which represent the four weighting factors described above. The four variables MAP INT 0 to 3 correspond respectively to the four addresses (SPEED INDEX, LOAD INDEX), (SPEED INDEX + l, LOAD INDEX), (SPEED INDEX, LOAD INDEX + l), (SPEED INDEX + l, LOAD INDEX + l).

The method of calculating the weighting factors MAP INT 0 to 3 for the prevailing speed and load is shown in Figure 6. A main rectangle is formed in the speed/load plane, the corners of the rectangle lying at addresses (SPEED INDEX, LOAD INDEX), (SPEED INDEX + l, LOAD INDEX), (SPEED INDEX, LOAD INDEX +l), (SPEED INDEX + l, LOAD INDEX + l). This main rectangle is divided into four sub-rectangles by drawing the abscissa and ordinate passing through the prevailing speed and load demand, these sub-rectangles having areas A0, Al, A2, A3. The weighting factor for each of the four array points is calculated by dividing the area of the sub-rectangle diagonally opposite the array point by the area of the main rectangle. Thus, the weighting factors MAP INT 0 to 3 have the following values:-

MAP INT 0 = A0/A
MAP INT l = Al/A
MAP INT 2 = A2/A
MAP INT 3 = A3/A

where A = A0 + Al + A2 + A3.

The module IGNLU calls the sub module LOOK UP which calculates the basic spark advance angle as a variable SPK ANG BASE by the interpolation process which has been described above. The module IGNLU then supplies the variable SPK ANG BASE to the module SAFIRE.

The module IGNLU is executed after each ignition spark and the module SAFIRE is executed after module IGNLU.

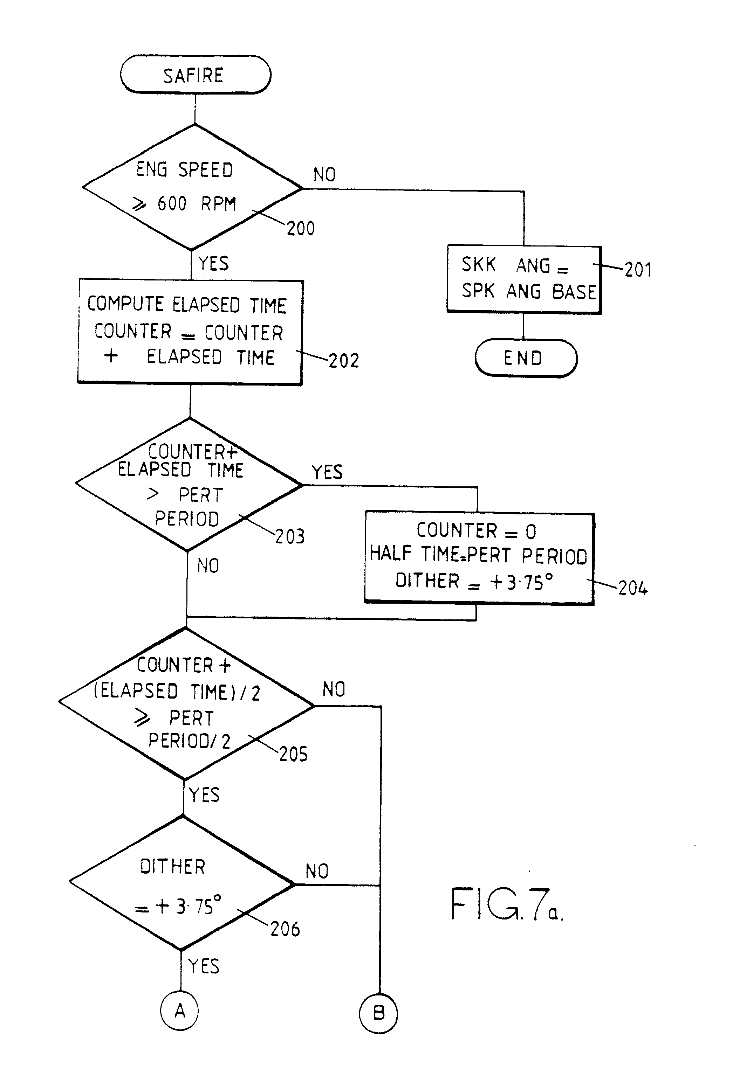

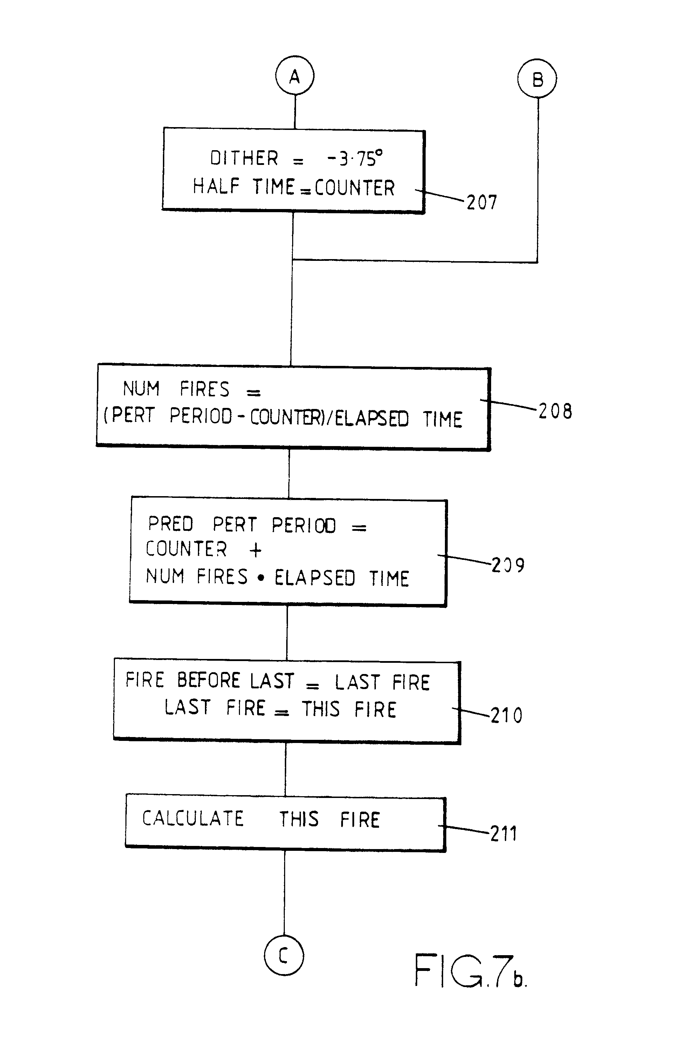

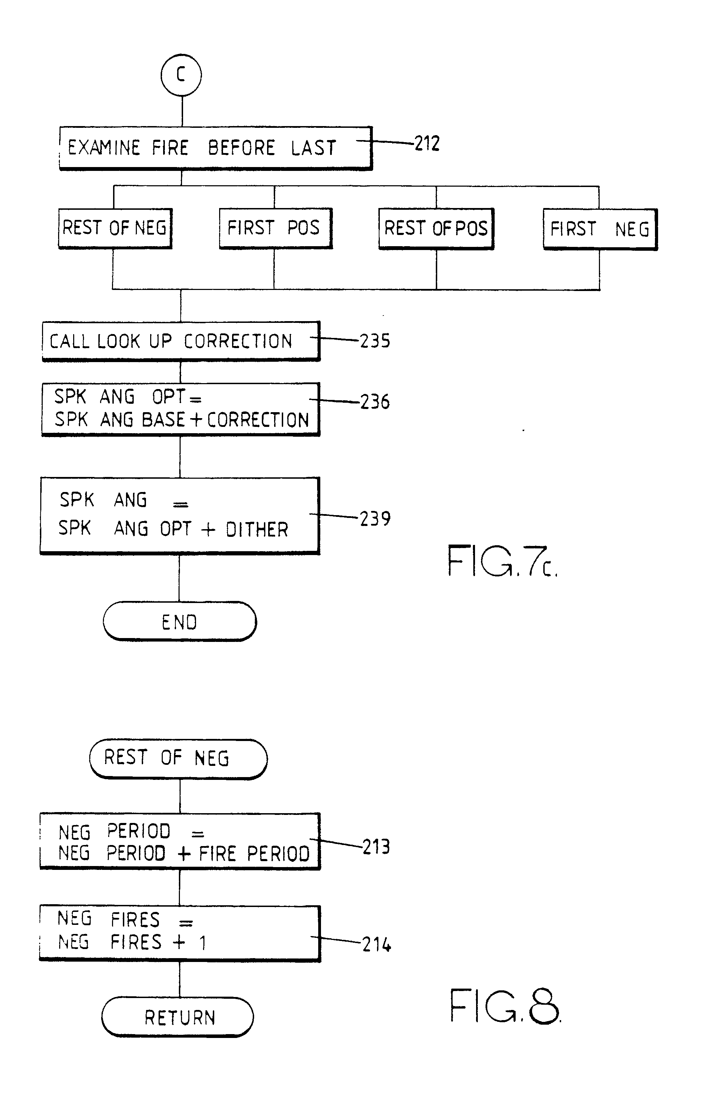

The module SAFIRE generates the perturbation waveform, determines each perturbation to the spark advance angle, determines the positive and negative measurement windows and accumulates the fire periods occurring in these windows, and calculates the slope of engine output with respect to spark advance. This module uses the slope measurement to update the spark advance correction schedule and retrieves a correction value to the spark advance from this schedule. This module also sums the basic spark advance value SPK ANG BASE with the perturbation value and the calculated correction value to produce a spark command value SPK ANG for the spark advance angle and supplies this to the module DWELL. This module will now be described with reference to the flow chart shown in Figure 7.

In the present example, the lowest perturbation frequency is l0 Hz. As a four cylinder engine has two engine fires for each revolution of the crankshaft, and as it is necessary to produce a minimum of two perturbations for each perturbation cycle, the perturbations can only be used when the engine speed is greater than or equal to 600 RPM. Thus, after entering the module SAFIRE, in a step 200, a variable ENG SPEED representing engine speed is examined. If the engine speed is less than 600 RPM, in a step 20l SPK ANG is set to SPK ANG BASE. If the engine speed is equal to or greater than 600 RPM, in a step 202 a variable ELAPSED TIME is computed. This variable represents the time which has elapsed since the previous execution of this module and is approximately equal to the fire period. It is computed from the output of an internal clock in the microcomputer l00. A variable COUNTER is then incremented by ELAPSED TIME. The variable COUNTER represents the time which has elapsed since the beginning of the present perturbation cycle.

In a step 203, the sum of COUNTER and ELAPSED TIME is compared with a constant PERT PERIOD. The constant PERT PERIOD represents the minimum period of each cycle of the perturbation waveform and, as the minimum frequncy is l0 Hz, this constant has a value of l00 ms. If the sum is greater than PERT PERIOD, this means that it is not possible to fit a further engine fire into the present cycle. Consequently, a new cycle must commence. In order to achieve this, in a step 204, COUNTER is reset to zero. Also, a variable HALF TIME is set to PERT PERIOD and a variable DITHER is set to + 3.75°. The variable HALF TIME usually indicates the duration of the first part of each cycle. However, for a reason which will be explained below, it is set to PERT PERIOD at this stage . DITHER represents the perturbation value.

In a step 205, the condition COUNTER plus ELAPSED TIME/2 ≥ PERT PERIOD/2 is checked. In a step 206, the condition DITHER = + 3.75° is checked. The conditions of steps 205 and 206 jointly define the transition point between the first and second parts of the cycle. It is to be noted that the transition will occur approximately half wave through each cycle.

If the conditions in steps 205 and 206 are satisfied, the second part of the cycle commences. In order to achieve this, in a step 207, DITHER is set to -3.75° so as to provide a negative perturbation and HALF TIME is set to COUNTER. Thus, the duration of the first part of the cycle is now stored in HALF TIME.

In a step 208, a variable NUM FIRES which represents a prediction of the whole number of engine fires which can be achieved in the remaining part of the present perturbation waveform is computed. In order to do this, (PERT PERIOD - COUNTER) is divided by ELAPSED TIME and the result is truncated to an integer. In a step 209, a variable PRED PERT PERIOD is computed and this variable represents an estimate of the period of the present cycle of the perturbation waveform.

As mentioned above, the present execution of the module SAFIRE occurs between ignition sparks. The perturbation to the spark advance angle which is calculated during the present execution of this module cannot take effect until the next ignition spark. Also, the value of the variable FIRE PERIOD which is available for the present execution of this module relates to the previous fire period. The perturbation to the spark advance angle for the spark which occurred at the beginning of this fire period was calculated during the last but one execution of this module. In using the presently available value of FIRE PERIOD to calculate the slope, it must be determined whether the central point of the fire period occurred in a positive or negative measurement window. In order to do this, this module uses three variables THIS FIRE, LAST FIRE, and FIRE BEFORE LAST. The values of these variables determine respectively whether the fire period following the next ignition spark, the fire period following the immediately preceding ignition spark, and the fire period following the previous but one ignition spark occurred in a positive or negative measurement window. Each of these variables can take one of four values and these are FIRST POS, REST OF POS, FIRST NEG, and REST OF NEG. These four values indicate respectively that a fire period is the first fire period in a positive measurement window, one of the remaining fire periods in a positive measurement window, the first fire period in a negative measurement window, and one of the remaining fire periods in a negative measurement window.

During each execution of this module, the values of these four variables must be updated and, in step 210, the variables FIRE BEFORE LAST and LAST FIRE are updated by setting them respectively to the presently held values of the variables LAST FIRE and THIS FIRE.

In a step 211 a new value for the variable THIS FIRE is calculated. As may be recalled, this refers to the fire period following the next ignition spark. In order to do this, the following comparison is first made:

$$0.2 \text{ (PRED PERT PERIOD)} \leq \text{COUNTER} + 0.5 \text{ (FIRE PERIOD)} < 0.2 \text{ (PRED PERT PERIOD)} + \text{HALF TIME}$$

COUNTER + 0.5 (FIRE PERIOD) the central point of the next fire period. In the present example, the positive and negative measurement windows follow the first and second parts of the period of each perturbation cycle by 72°. Thus, 0.2 (PRED PERT PERIOD) and 0.2 (PRED PERT PERIOD) + HALF TIME define the beginning and end of the positive measurement window.

If the result of this comparison is yes, this means that the central point of the next fire period will fall in the positive measurement window. The variable LAST FIRE is examined and the variable THIS FIRE is set to FIRST POS OR REST OF POS as is appropriate. If the result of the comparison is no, this means that the central point of the next fire period will fall in a negative measurement window and THIS FIRE is set to FIRST NEG or REST OF NEG.

As mentioned above HALF TIME is set to PERT PERIOD during the first part of each period. Without doing this, HALF TIME would be set to the duration of the first part of the previous cycle. Under rapid deceleration, there is a danger that the next engine fire could be judged incorrectly to be in a negative measurement window. By setting HALF TIME to PERT PERIOD this danger is avoided.

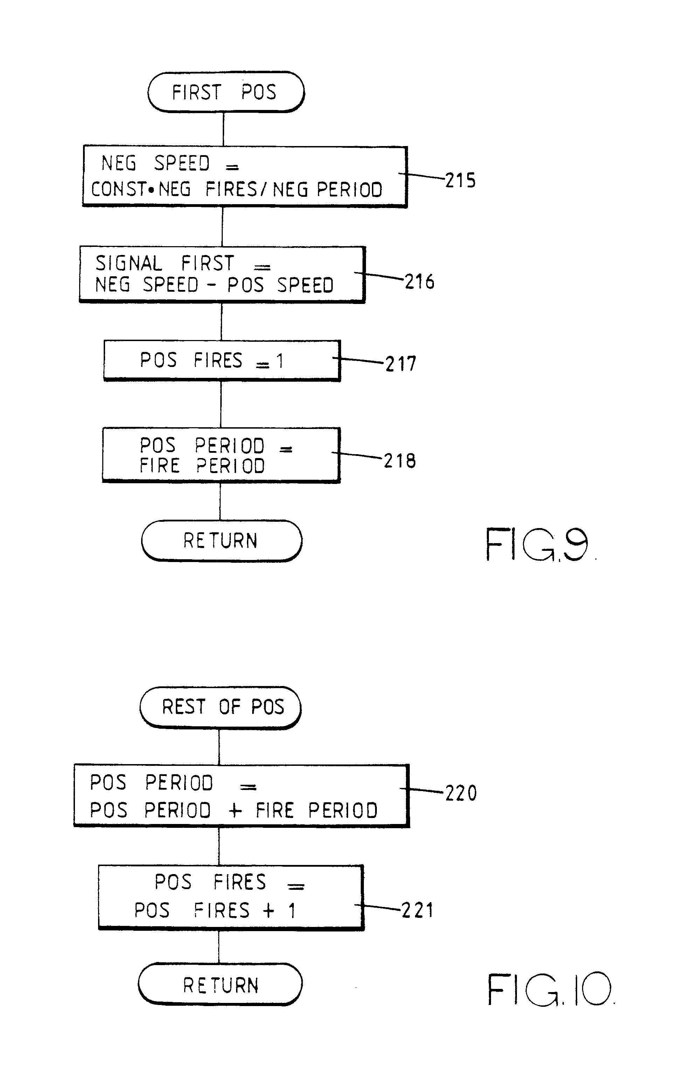

Next, in a step 212, the variable FIRE BEFORE LAST is examined. Depending upon the value of this variable, one of the sub routines REST OF NEG, FIRST POS, REST OF POS, and FIRST NEG is performed and these sub routines are shown respectively in Figures 8, 9, 10, and 11.

As shown in Figure 8, if FIRE BEFORE LAST has a value REST OF NEG, in a step 213 a variable NEG PERIOD which represents the accumulated value of the fire period in the negative measurement window is incremented by the present value of FIRE PERIOD. Then, in a step 214, a variable

NEG FIRES which represent the number of ignition sparks in the negative measurement window is incremented.

As shown in Figure 9, when FIRE BEFORE LAST has a value FIRST POS, in a step 2l5, a variable NEG SPEED is calculated. This variable represents the average engine speed during the negative measurement window and it is calculated by dividing NEG FIRES by NEG PERIOD and multiplying the result by a constant CONST. Then, in a step 2l6, a variable SIGNAL FIRST is calculated by subtracting NEG SPEED from a variable POS SPEED. The variable POS SPEED represents the average speed in the positive measurement window and variable SIGNAL FIRST represents the change in engine speed which is caused by the change in perturbation to the spark advance angle between the first and second parts of the perturbation wave form. Then, in a step 2l7, a variable POS FIRES which represents the number of engine fires in the positive measurement window is set to l. In a step 2l8, a variable POS PERIOD which represents the accumulated fire periods in the positive measurement window is set to the present value of FIRE PERIOD.

As shown in Figure l0, when FIRE BEFORE LAST has a value REST OF POS, in a step 220, POS PERIOD is incremented by the present value of FIRE PERIOD. Then, in a step 22l, POS FIRES is incremented.

As shown in Figure ll, when FIRE BEFORE LAST has a value FIRST NEG, in a step 225, the variable POS SPEED is evaluated by dividing POS FIRES by POS PERIOD and multiplying the result by CONST. Then, in a step 226, a variable SIGNAL SECOND is evaluated by subtracting NEG SPEED from POS SPEED. The variable SIGNAL SECOND represents the change in engine speed which is caused by the change in perturbation value from the second part of one perturbation wave form to the first part of the next perturbation wave form. In a step 227, a variable SLOPE which represents the slope of engine output with respect to spark advance is evaluated by subtracting SIGNAL FIRST from SIGNAL SECOND. By evaluating the slope in this manner, as mentioned above with reference to Figure l, changes in engine speed which are caused by rapid acceleration or deceleration of the engine are eliminated. The magnitude of SLOPE is limited to a preset maxi mum value.

In a step 228, the sub module MAP STORE is called. This module uses the recently calculated value of SLOPE together with the values of MAP INT 0 to 3, SPEED INDEX and LOAD INDEX, which it receives from module IGNLU, to update the spark advance correction schedule lll. This is performed in a manner described with reference to figure l.

Next, in a step 229, the variable NEG FIRES is set to l and in a step 230 the variable NEG PERIOD is set to the present value of FIRE PERIOD.

Returning now to Figure 7, after one of the sub routines has been performed, in a step 235, the sub module LOOK UP CORRECTION is called. This sub module calculates a variable CORRECTION which represents the appropriate correction to the spark advance angle from the values stored in the spark advance correction schedule. This variable is calculated by the interpolation method described with reference to Figure l.

Next, in a step 236, a variable SPK ANG OPT is calculated as the sum of SPK ANG BASE and CORRECTION. SPK ANG OPT represents the optimum spark advance angle for the prevailing engine speed and load demand.

In a step 239, the variable SPK ANG, which represents the command value of the spark advance angle, is calculated as the sum of SPK ANG OPT and a constant DITHER. Thus, either a positive or negative perturbation corresponding to $3.75°$ of crankshaft is imposed on the optimum spark advance angle.

Returning to Figure 5, the routine DWELL uses variables TOOTH, ENG SPEED and SPK ANG to calculate a variable COIL DRIVE which controls the generation of each spark. Specifically, COIL DRIVE causes the HIGH SPEED output of microcomputer l00 to go low when the engine crankshaft passes the commanded spark advance position and to go high early enough to allow the primary current in the ignition coil to reach the required value.

In the program module SAFIRE which has been described with reference to Figures 7 to ll, step 2l5 of the sub routine FIRST POS and step 225 of sub routine FIRST NEG involve a division which requires a substantial amount of computing time. There will now be described with reference to Figures l2 and l3 a modification to these two sub routines which avoids this division.

The small changes in engine speed which occur between the positive and negative measurement windows are proportional to minus the change in the average engine fire period during the two windows. Thus, an indication in the change of speed could be obtained by calculating the change in the average fire period. However, the constant of proportionality increases with the square of the engine speed and so the sensitivity using this method would fall rapidly with increasing engine speed. Consequently, at high engine speeds, the correction schedule would be updated too slowly whilst there could be instability at low engine speeds.

This variation in sensitivity may be avoided by multiplying the change in average fire period by the square of the engine speed. The square of the engine speed is approximately proportional to the product of the number of fires occuring in the first half period and the numbers of fires occuring in the second half period of each cycle of the perturbation wave form. Thus, the change in engine speed between a positive measurement window and a negative measurement window may be expressed as follows:-

$$\text{Change in speed} = k \cdot n^- n^+ (T^+/n^+ - T^-/n^-)$$

where k is a constant, $n^+$ and $n^-$ are the number of engine fires occurring respectively in the positive and negative measurement windows, and $T^+$ and $T^-$ are the accumulated fire periods for these windows and so $T^+/n^+$ and $T^-/n^-$ are respective average fire periods.

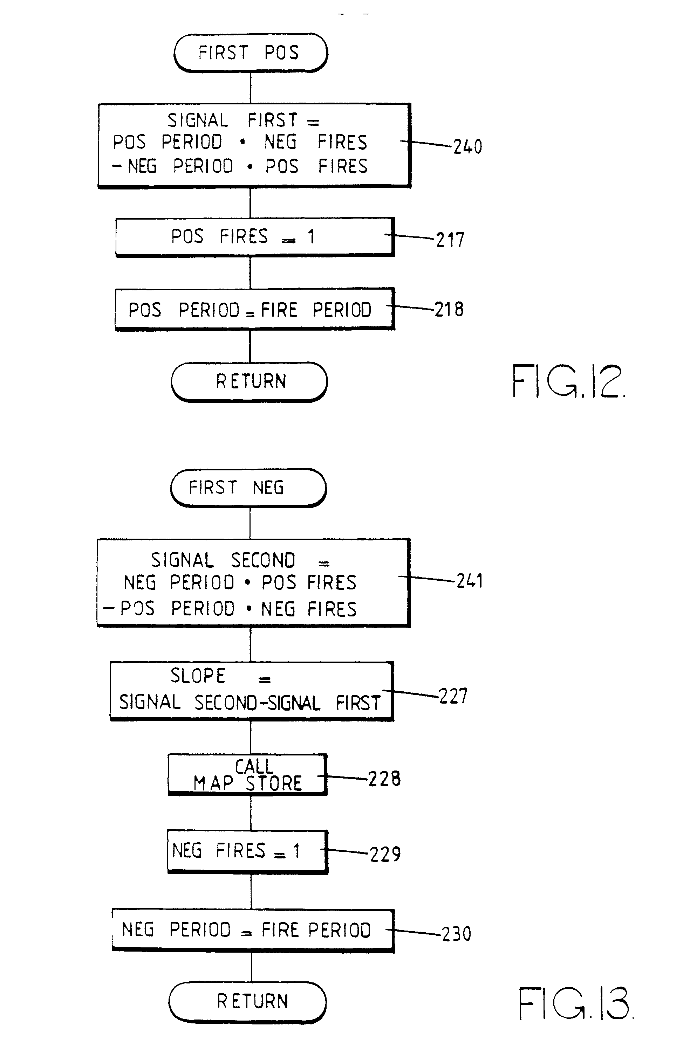

This expression, simplified by cancellation of the denominator terms, together with a similar expression for the transition from a negative measurement window to a positive measurement window is used in the modification shown in Figures 12 and 13. In these Figures, like steps are denoted by the same reference numerals.

Referring now to Figure 12, in the sub routine FIRST POS, the steps 215 and 216 of Figure 9 are replaced by a new step 240. In the step 240, the variable SIGNAL FIRST is calculated as the difference between the product of variables POS PERIOD and NEG FIRES and the product of the variables NEG PERIOD and POS FIRES.

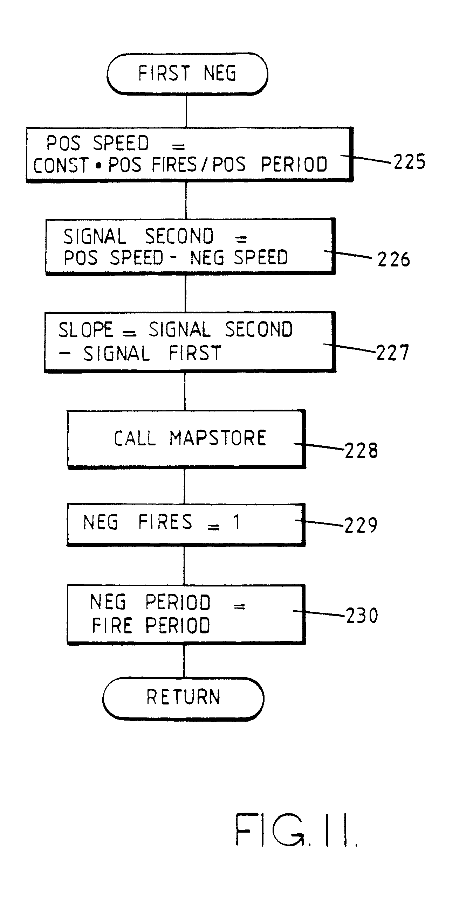

In Figure 13, the steps 225 and 226 of Figure 11 are replaced by a new step 241. In step 241, the variable SIGNAL SECOND is calculated as a difference between the product of NEG PERIOD and POS FIRES and the product of POS PERIOD and NEG FIRES.

As may be seen, steps 240 and steps 241 do not involve a division and so less computation time is required with the modification as shown in Figures 12 and 13.

Although the above example describes applying perturbations to the spark advance angle in a spark ignition engine in order to obtain corrections to this parameter, the present invention is not limited to this application. For example, it could also be used to apply perturbations to the timing of fuel injection in either petrol or diesel engines so as to provide corrections for this parameter. Also, in both petrol and diesel engines, the air/fuel ratio is established in accordance with a predetermined schedule. The present invention could be used to apply perturbations to this ratio so as to obtain corrections to this parameter. In some diesel and in some petrol engines, exhaust gases are mixed with engine intake air in a predetermined ratio. The present invention could be used to apply perturbations to this ratio so as to obtain a correction for this parameter.

In the example described above, the spark advance angle is perturbed and this same parameter is corrected in accordance with the slope measurements. However, it is within the present invention to perturb one parameter and correct another parameter. For example, the spark advance could be perturbed and the slope measurements used to correct values in a schedule for the air/fuel ratio.

In the system discussed with reference to Figures 4 to 13, there are provided a fixed spark advance schedule 110 and a spark advance correction schedule 111. By way of modification there may be provided a single spark advance schedule which is initially provided with the fixed values. The values would then be updated in accordance with the slope measurement.

In the example described above, the slope of engine output with respect to an input parameter in the form of spark advance is used as a feedback signal to update a correction memory. However, the present invention is not limited to using the slope of engine output with respect to an input parameter or a feedback signal. In the following further example, the output of an exhaust gas oxygen sensor is used to update a correction memory for the air/fuel ratio.

This further example will be described by way of a modification to the arrangement shown in Figure 1. In the further example, the components 40, 41, 43, 44, 45 and 46 are removed. Memory 35 is replaced by a memory which contains fixed values for air/fuel ratio and memory 38 is replaced by an air/fuel ratio correction memory. The devices 36 and 39 are replaced by devices for calculating air/fuel ratio and the output of summer 37 is connected to a fuel control device. Spark advance is controlled conventionally and device 42 is removed.

In this further example, an oxygen sensor is positioned to sense the level of oxygen in the exhaust gas and arranged to provide an output signal indicative of actual air/fuel ratio. This output signal is fed to the negative input of an additional summer. The output of the device which calculates the basic air/fuel ratio is fed to the positive input of this summer. The output of this summer represents the error between the actual air/fuel ratio and the basic air/fuel ratio. This output is fed to the correction memory updating device 47 which updates the correction memory for the air/fuel ratio in the manner described above.

## Claims

1. An adaptive control system for an internal combustion engine (10), said control system comprising: means (30) for determining the engine speed; means (31) for determining the load demand to which the engine (10) is subjected; means (36) for determining a basic value or a series of basic values for a particular engine control parameter in accordance with a fixed schedule (35); a correction schedule (38) in which correction values for said particular control parameter are stored as a two dimensional array as a function of engine speed and load demand; means (39) for providing a calculated correction value for the prevailing engine speed and load demand, said means multiplying each of the correction values stored in the correction schedule (39) at the four array points in the speed/load plane which surround the prevailing engine speed and load demand by a respective weighting factor to provide product values and then summing the four product values to produce a calculated correction value; means (37) for determining a command value for said particular control parameter by summing a respective basic value and a respective calculated correction value; and means (47) for updating the values stored in the correction schedule (38), said weighting factors being determined by forming a main rectangle whose corners lie on the four array points surrounding the prevailing speed and load demand, dividing said main rectangle into four sub-rectangles by the ordinate and abscissa which pass through the prevailing speed and load demand point, and calculating the weighting factor for each array point in dependence upon the area of the diagonally opposite sub-rectangle, characterised by said updating means (47) producing a series of error values, multiplying each error value by a respective weighting factor for each of the four array points which surround the prevailing engine speed and load demand to form four product values and using said four product values to update the correction values stored at said four array points.

2.  An adaptive control system as claimed in Claim 1, in which the weighting factor for each array point is calculated by dividing the area of the diagonally opposite sub-rectangle by the area of the main rectangle.

3.  An adaptive control system as claimed in Claim 1 or Claim 2, in which said updating means (47) updates the correction value stored at each array point by multiplying a respective product value by a constant and adding the resulting value to the correction value presently stored at the array point.

4.  An adaptive control system as claimed in any one of the preceding claims, in which fixed values for said particular control parameter are stored in said fixed schedule (35) as a two dimensional array as a function of engine speed and load demand, and each basic value of said particular control parameter is determined for the value stored at the four array points in the speed/load plane which surround the prevailing speed and load demand, said particular control parameter at each point being multiplied by a respective weighting factor to form a product value and the four product values being summed to produce the basic value, said weighting factors being determined in the same manner as for the correction schedule.

5.  An adaptive control system as claimed in any one of the preceding claims, in which the system further comprises means (40,41,43-46) for determining a series of values for the slope of engine output with respect to a certain engine control parameter, each such value corresponding to the prevailing engine speed and load demand, said certain and particular parameters being the same parameter or different parameters, and said updating means comparing each slope value with a predetermined value to produce said series of error values.

6.  An adaptive control system as claimed in claim 5, in which the internal combustion engine (10) has a flywheel (11) connected through resilient shafting (12,14) and a gear arrangement (13) to a load (15), said flywheel, resilient shafting and gear arrangement forming a resonant system which has a particlar resonant frequency for each gear ratio established by said gear arrangement (13); said system further includes a position transducer (16) for detecting the passage of the engine crankshaft past at least one reference point during each engine fire period; and said slope determining means comprises:

    a perturbation generator (40) for generating a periodic perturbation waveform, said perturbation generator producing a positive perturbation value for said certain control parameter during the first part of each period of the perturbation waveform and a negative perturbation value for said certain control parameter during the second part of each period of the perturbation waveform, each period of said waveform being equal to a whole number of engine fire periods and the frequency of said waveform being greater than three quarters of the highest resonant frequency of the resonant system;

means (43) for creating at least one series of contiguous positive and negative measurement windows associated with respective first and second parts of each period of said perturbation waveform, each measurement window lagging its respective part of a period of the perturbation waveform by a predetermined phase shift;

a first accumulator (44) for accumulating for each positive measurement window the individual fire periods whose central points fall within said positive window to produce a total fire period for said positive window;

a second accumulator (45) for accumulating for each negative measurement window the individual fire periods whose central points fall within said negative window to produce a total fire period for said negative windows; and

means (46) for calculating a series of values for the slope of engine output with respect to said certain control parameter from said total fire periods accumulated in said first and second accumulators.

7. An adaptive control system as claimed in claim 5 or claim 6, in which said certain control parameter is an ignition timing parameter.

8. An adaptive control system as claimed in Claim 7, in which said engine is a spark ignition engine, and said certain control parameter is the spark advance angle.

9. An adaptive control system as claimed in any one of the preceding claims in which said particular control parameter is a mixture control parameter.

10. A method of determining a series of command values for a particular control parameter for an internal combustion engine, said method comprising determining the engine speed, determining the load demand to which the engine is subjected, determining a basic value or a series of basic values for said particular control parameter in accordance with a fixed schedule, providing a correction schedule in which correction values for said particular control parameter are stored as a two dimensional array as a function of engine speed and load demand, providing a calculated correction value for the prevailing engine speed and load demand by multiplying each of the correction values stored in the four array points in the speed/load plane which surround the prevailing engine speed and load demand by a respective weighting factor to produce a product value and summing the four product values to produce the calculated correction value, summing a respective basic value and a respective calculated correction value to produce a command value for said particular control parameter, and updating the values stored in the correction schedule by producing a series of error values representative of the effects of successive command values on the engine, multiplying each error value by a respective weighting factor for each of the four array points surrounding the prevailing engine speed and load demand to form four product values for each of the series of error values, and using said four product values to update the correction values stored at said four array points, said weighting factors used in calculating the calculated correction value and updating the stored values being determined by forming a main rectangle whose corners lie on the four array points surrounding the prevailing speed and load demand, dividing said main rectangle into four sub-rectangles by the ordinate and abscissa which pass through the prevailing speed and load demand point, and calculating the weighting factor for each array point in dependence upon the area of the diagonally opposite sub-rectangle.

11. A method as claimed in Claim 10, in which the method further includes, when updating the correction schedule, multiplying each product value by a constant and adding the resulting value to the correction value presently stored at the respective array point.

12. A method as claimed in claim 10 or claim 11, in which said method further includes determining a series of values for the slope of engine output with respect to a certain engine control parameter for the prevailing engine speed and load demand, said certain and particular control parameters being the same parameter or different parameters, and comparing each slope value with a predetermined value to produce said series of error values.

13. A method as claimed in any one of Claims 10 to 12, characterised in that said certain control parameter is an ignition timing parameter.

14. A method as claimed in any one of claims 10 to 13, characterised in that said particular control parameter is a mixture control parameter.

**Revendications**

1. Système de commande adaptative pour un moteur à combustion interne (10), ce système de commande comprenant : un moyen (30) destiné à déterminer la vitesse du moteur ; un moyen (31) destiné à déterminer la demande de sollicitation à laquelle est soumis le moteur (10) ; un moyen (36) destiné à déterminer une valeur de base ou une série de valeurs de base pour un paramètre particulier de commande de moteur, conformément à un programme fixe (35) ; un programme de correction (38) dans lequel on mémorise des valeurs de correction pour le paramètre particulier de commande, sous forme d'un système à deux dimensions, en fonction de la vitesse du moteur et de la demande de sollicitation ; un moyen (39) destiné à procurer une valeur calculée de correction pour la demande de sollicitation et la vitesse du moteur en vigueur, ce moyen consistant à multiplier chacune des valeurs de correction mémorisées dans le programme de correction (39) aux quatre points de zone dans le plan vitesse/sollicitation, qui entourent la demande de sollicitation et la vitesse du moteur en vigueur, par un facteur de pondération respectif dans le but de procurer des valeurs de produits et ensuite, à faire la somme des quatre valeurs de produit pour obtenir une valeur calculée de correction ; un moyen (37) destiné à déterminer une valeur de commande pour le paramètre particulier de commande, en additionnant une valeur respective de base et une valeur calculée de correction respective ; et un moyen (47) destiné à mettre à jour les valeurs mémorisées dans le programme de correction (38), les facteurs de pondération étant déterminés en formant un rectangle principal dont les coins sont disposés aux quatre points de zone entourant la demande de sollicitation et la vitesse en vigueur, en subdivisant ce rectangle principal en quatre sous-rectangles par l'ordonnée et l'abscisse qui passent par le point de demande de sollicitation et de vitesse en vigueur, et en calculant le facteur de pondération pour chaque point de la zone en fonction de la superficie du sous-rectangle diagonalement opposé, **caractérisé par** le fait que le moyen de mise à jour (47) procure une série de valeurs d'erreur, **en ce qu'**on multiplie chaque valeur d'erreur par un facteur de pondération respectif pour chacun des quatre points de zone, qui entourent la demande de sollicitation et la vitesse du moteur en vigueur, pour obtenir quatre valeurs de produit, et **en ce qu'**on utilise les quatre valeurs de produit pour mettre à jour les valeurs de correction mémorisées aux quatre points de zone.

2. Système de commande adaptative selon la revendication 1, dans lequel on calcule le facteur de pondération pour chaque point de zone en divisant la surface du sous-rectangle diagonalement opposé par la surface du rectangle principal.

3. Système de commande adaptative selon la revendication 1 ou 2, dans lequel le moyen de mise à jour (47) met à jour la valeur de correction mémorisée à chaque point de zone, en multipliant une valeur de produit respective par une constante et en ajoutant la valeur résultante à la valeur de correction mémorisée à ce moment aux points de zone.

4. Système de commande adaptative selon l'une quelconque des revendications précédentes, dans lequel on mémorise les valeurs fixes pour le paramètre particulier de commande dans le programme fixe (35), sous forme d'un système à deux dimensions, en fonction de la vitesse du moteur et de la demande de sollicitation, et on détermine chaque valeur de base de ce paramètre particulier de commande à partir de la valeur mémorisée aux quatre points de zone, dans le plan de vitesse/sollicitation qui entoure la demande de sollicitation et la vitesse en vigueur, le paramètre particulier de commande à chaque point étant multiplié par un facteur de pondération respectif, pour obtenir une valeur de produit et les quatre valeurs de produit étant additionnées pour obtenir la valeur de base, les facteurs de pondération étant déterminés de la même manière que pour le programme de correction.

5. Système de commande adaptative selon l'une quelconque des revendications précédentes, dans lequel le système comprend, en outre, des moyens (40, 41, 43-46) destinés à déterminer une série de valeurs pour la pente de la puissance du moteur par rapport à un certain paramètre de commande de moteur, chacune de ces valeurs correspondant à la demande de sollicitation et à la vitesse du moteur en vigueur, ledit certain paramètre et ledit paramètre particulier étant les mêmes paramètres ou étant des paramètres différents et le moyen de mise à jour comparant chaque valeur de pente à une valeur prédéterminée pour obtenir les séries de valeurs d'erreur.

6. Système de commande adaptative selon la revendication 5, dans lequel le moteur à combustion interne (10) est muni d'un volant (11) raccordé par l'intermédiaire d'une transmission résiliente (12, 14) et d'un arrangement d'engrenage (13) à une charge (15), le volant, la transmission résiliente et l'arrangement d'engrenage formant un système résonant muni d'une fréquence de résonance particulière pour chaque rapport d'engrenage établi par l'arrangement d'engrenage (13), le système comprenant, en outre, un transducteur de position (16) destiné à détecter le passage du vilebrequin du moteur au-delà d'au moins un point de référence, au cours de chaque période d'allumage du moteur, les moyens de détermination de la pente comprenant :

un générateur de perturbations (40) destiné à générer une onde de perturbation périodique, ce générateur de perturbations procurant une valeur de perturbation positive pour ledit certain paramètre de commande au cours de la première partie de chaque période de l'onde de perturbation et une valeur de perturbation négative pour ledit certain paramètre de commande au cours de la seconde partie de chaque période de l'onde de perturbation, chaque période d'onde étant égale à un nombre entier de périodes d'allumage de moteur et la fréquence de l'onde étant supérieure à 3/4 de la fréquence de résonance la plus élevée du système de résonance ;

un moyen (43) destiné à créer au moins une série de fenêtres contiguës positives et négatives de mesure associées avec les première et seconde parties respectives de chaque période d'onde de perturbation, chaque fenêtre de mesure étant en retard de phase par rapport à sa partie respective d'une période de l'onde de perturbation, le déphasage étant prédéterminé;

un premier accumulateur (44) destiné à accumuler, pour chaque fenêtre positive de mesure, les périodes individuel les d'allumage dont les points centraux rentrent dans le cadre de la fenêtre positive, pour obtenir une période totale d'allumage pour la fenêtre positive ;

un second accumulateur (45) destiné à accumuler, pour chaque fenêtre négative de mesure, les périodes individuel les d'allumage dont les points centraux rentrent dans le cadre de la fenêtre négative, pour obtenir une période totale d'allumage pour la fenêtre négative ; et

un moyen (46) destiné à calculer une série de valeurs pour la pente de la puissance du moteur par rapport audit certain paramètre de commande, à partir des périodes totales d'allumage accumulées dans les premier et second accumulateurs.

7. système de commande adaptative selon la revendication 5 ou 6, dans lequel ledit certain paramètre de commande est un paramètre de réglage d'allumage.

8. Système de commande adaptative selon la revendication 7, dans lequel le moteur est un moteur à allumage commandé, et ledit certain paramètre de commande est constitué par l'angle d'avance à l'allumage.

9. Système de commande adaptative selon l'une quelconque des revendications précédentes, dans lequel ledit paramètre particulier de commande est un paramètre mixte de commande.

10. Procédé destiné à déterminer un série de valeurs de commande pour un paramètre particulier de commande destiné à un moteur à combustion interne, ce procédé consistant à déterminer la vitesse du moteur, à déterminer la demande de sollicitation à laquelle le moteur est soumis, à déterminer une valeur de base ou une série de valeurs de base pour le paramètre de commande conformément à un programme fixe, à procurer un programme de correction dans lequel les valeurs de correction pour le paramètre particulier de commande sont mémorisées sous forme d'un système à deux dimensions en fonction de la demande de sollicitation et de la vitesse du moteur, à procurer une valeur de correction calculée pour la demande de sollicitation et la vitesse de moteur en vigueur en multipliant chacune des valeurs de correction mémorisée dans les quatre points de zone dans le plan de vitesse/sollicitation qui entoure la demande de sollicitation et la vitesse de moteur en vigueur par un facteur de pondération respectif, pour obtenir une valeur de produit et faire la somme des quatre valeurs de produit pour obtenir la valeur de correction calculée, additionner une valeur de base respective et une valeur de correction calculée respective pour obtenir une valeur de commande pour le paramètre particulier de commande et à mettre à jour les valeurs mémorisées dans le programme de correction en procurant une série de valeurs d'erreur représentatives des effets de valeurs de commande successives sur le moteur, à multiplier chaque valeur d'erreur par un facteur de pondération respectif pour chacun des quatre points de zone entourant la demande de sollicitation et la vitesse de moteur en vigueur, pour obtenir quatre valeurs de produits pour chacune des séries de valeurs d'erreur et à utiliser ces quatre valeurs de produit pour mettre à jour les valeurs de correction mémorisées aux quatre points de zone, les valeurs de pondération utilisées dans le calcul de la valeur de correction calculée et la mise à jour des valeurs mémorisées étant déterminés par la formation d'un rectangle principal dont les coins reposent sur les quatre points de zone entourant la demande de sollicitation et la vitesse en vigueur, à subdiviser le rectangle principal en quatre sous-rectangles par l'ordonnée et l'abscisse qui passent par le point de demande de sollicitation et de vitesse en vigueur et à calculer le facteur de pondération pour chaque point de zone conformément à la surface du sous-rectangle diagonalement opposé.

11. Système de commande adaptative selon la revendication 10, dans lequel le procédé comprend, en outre, lors de la mise à jour du programme de correction, le fait de multiplier chaque valeur de produit par une constante et d'additionner la valeur résultante à la valeur de correction mémorisée à ce moment au point de zone respectif.

12. système de commande adaptative selon la revendication 10 ou 11, dans lequel le procédé comprend, en outre, le fait de déterminer une série de valeurs pour la pente de la puissance du moteur par rapport à un certain paramètre de commande du moteur pour la demande de sollicitation et la vitesse du moteur en vigueur, ledit certain paramètre et ledit paramètre particulier étant les mêmes paramètres ou des paramètres différents, ainsi que le fait de comparer chaque valeur de pente à une valeur prédéterminée pour obtenir la série de valeurs d'erreur.

13. Procédé selon l'une quelconque des revendications 10 à 12, **caractérisé en ce que** ledit certain paramètre de commande est un paramètre de réglage d'allumage.

14. Procédé selon l'une quelconque des revendications 10 à 13, **caractérisé en ce que** ledit paramètre particulier de commande est un paramètre mixte de commande.

**Patentansprüche**

1. Adaptives Steuersystem für eine Brennkraftmaschine (10), umfassend: eine Einrichtung (30) zum Bestimmen der Maschinendrehzahl; eine Einrichtung (31) zum Bestimmen der Lastanforderung, der die Maschine (10) unterliegt; eine Einrichtung (36) zum Bestimmen eines Grundwerts oder einer Serie von Grundwerten für einen speziellen Maschinensteuerparameter gemäß einem festen Programms (35); ein Korrekturprogramm (38), in dem Korrekturwerte für den speziellen Steuerparameter als zweidimensionales Datenfeld als Funktion von Maschinendrehzahl und Lastanforderung gespeichert sind; eine Einrichtung (39), die einen berechneten Korrekturwert für die Ist-Maschinendrehzahl und die Ist-Lastanforderung bildet und die jeden der Korrekturwerte, die in dem Korrekturprogramm (39) an den die Ist-Maschinendrehzahl und die Ist-Lastanforderung umgebenden vier Datenfeldpunkten in der Drehzahl/Last-Ebene gespeichert sind, mit einem jeweiligen Bewertungsfaktor unter Bildung von Produktwerten multipliziert und dann die vier Produktwerte unter Bildung eines berechneten Korrekturwerts addiert; eine Einrichtung (37), die durch Addieren eines jeweiligen Grundwerts und eines jeweiligen berechneten Korrekturwerts einen Führungswert für den speziellen Steuerparameter bestimmt; und eine Einrichtung (47), die die in dem Korrekturprogramm (38) gespeicherten Werte aktualisiert, wobei die Bewertungsfaktoren bestimmt werden durch Bilden eines Hauptvierecks, dessen Eckpunkte auf den die Ist-Drehzahl und die Ist-Lastanforderung umgebenden vier Datenfeldpunkten liegen, Unterteilen des Hauptvierecks in vier Unterviereke durch die Ordinate und die Abszisse, die durch den Ist-Drehzahl- und Ist-Lastanforderungspunkt verlaufen, und Berechnen des Bewertungsfaktors für jeden Datenfeldpunkt in Abhängigkeit von dem Bereich des diagonal entgegengesetzten Untervierecks, dadurch gekennzeichnet, daß die Aktualisierungseinrichtung (47) eine Serie von Fehlerwerten erzeugt, jeden Fehlerwert mit einem jeweiligen Bewertungsfaktor für jeden der die Ist-Maschinendrehzahl und die Ist-Lastanforderung umgebenden vier Datenfeldpunkte multipliziert unter Bildung von vier Produktwerten und Nutzung dieser vier Produktwerte zum Aktualisieren der an den vier Datenfeldpunkten gespeicherten Korrekturwerte.

2. Adaptives Steuersystem nach Anspruch 1, wobei der Bewertungsfaktor für jeden Datenfeldpunkt durch Division des Bereichs des diagonal entgegengesetzten Untervierecks durch den Bereich des Hauptvierecks berechnet wird.

3. Adaptives Steuersystem nach Anspruch 1 oder 2, wobei die Aktualisierungseinrichtung (47) den an jedem Datenfeldpunkt gespeicherten Korrekturwert durch Multiplikation eines jeweiligen Produktwerts mit einer Konstanten und Addieren des resultierenden Werts zu dem momentan an dem Datenfeldpunkt gespeicherten Korrekturwert aktualisiert.

4. Adaptives Steuersystem nach einem der vorhergehenden Ansprüche, wobei Festwerte für den speziellen Steuerparameter in dem festen Programm (35) als ein zweidimensionales Datenfeld als Funktion von Maschinendrehzahl und Lastanforderung gespeichert sind und jeder Grundwert des speziellen Steuerparameters für den an den die Ist-Drehzahl und die Ist-Lastanforderung umgebenden vier Datenfeldpunkten in der Drehzahl/Last-Ebene gespeicherten Wert bestimmt wird, wobei der spezielle Steuerparameter an jedem Punkt mit einem jeweiligen Bewertungsfaktor unter Bildung eines Produktwerts multipliziert wird und die vier Produktwerte unter Bildung des Grundwerts addiert werden, und wobei die Bewertungsfaktoren auf die gleiche Weise wie für das Korrekturprogramm bestimmt werden.

5. Adaptives Steuersystem nach einem der vorhergehenden Ansprüche, ferner umfassend Einrichtungen (40, 41, 43-46), die eine Serie von Werten für die Steigung der Maschinenausgangsleistung relativ zu einem bestimmten Maschinensteuerparameter bestimmen, wobei jeder dieser Werte der Ist-Maschinendrehzahl und der Ist-Lastanforderung entspricht und der bestimmte und der spezielle Parameter gleich oder verschieden sind und die Aktualisierungseinrichtung jeden Steigungswert mit einem vorbestimmten Wert unter Bildung der Serie von Fehlerwerten vergleicht.

6. Adaptives Steuersystem nach Anspruch 5, wobei die Brennkraftmaschine (10) ein Schwungrad (11) aufweist, das durch elastische Wellen (12, 14) und eine Getriebeanordnung (13) mit einer Last (15) verbunden ist, wobei das Schwungrad, die elastischen Wellen und die Getriebeanordnung ein Resonanzsystem bilden, das eine bestimmte Resonanzfrequenz für jedes Übersetzungsverhältnis der Getriebeanordnung (13) hat; das System ferner einen Lagegeber (16) aufweist, der das Vorbeilaufen der Maschinenkurbelwelle an wenigstens einem Bezugspunkt während jeder Maschinenzündperiode detektiert; und die Steigungsbestimmungseinrichtung umfaßt:
einen Störungsgeber (40), der eine periodische Störungswellenform erzeugt und für den bestimmten Steuerparameter während des ersten Teils jeder Periode der Störungswellenform einen positiven Störungswert und für den bestimmten Steuerparameter während des zweiten Teils jeder Periode der Störungswellenform einen negativen Störungswert erzeugt, wobei jede Periode dieser Wellenform gleich der Gesamtzahl von Maschinenzündperioden ist und die Frequenz der Wellenform größer als 3/4 der höchsten Resonanzfrequenz des Resonanzsystems ist;
eine Einrichtung (43), die wenigstens eine Serie von aneinandergrenzenden positiven und negativen Meßfenstern bildet, die dem jeweiligen ersten und zweiten Teil jeder Periode der Störungswellenform zugeordnet sind, wobei jedes Meßfenster seinem jeweiligen Teil einer Periode der Störungswellenform um eine vorbestimmte Phasenverschiebung nacheilt;
einen ersten Akkumulator (44), der für jedes positive Meßfenster die einzelnen Zündperioden, deren Mittelpunkte in das positive Fenster fallen, unter Bildung einer Gesamtzündperiode für dieses positive Fenster speichert;
einen zweiten Akkumulator (45), der für jedes negative Meßfenster die einzelnen Zündperioden, deren Mittelpunkte in das negative Fenster fallen, unter Bildung einer Gesamtzündperiode für dieses negative Fenster speichert; und
eine Einrichtung (46), die aus den in dem ersten und zweiten Akkumulator gespeicherten Gesamtzündperioden eine Serie von Werten für die Steigung der Maschinenausgangsleistung relativ zu dem bestimmten Steuerparameter berechnet.

7. Adaptives Steuersystem nach Anspruch 5 oder 6, wobei der bestimmte Steuerparameter ein Zündzeitpunktparameter ist.

8. Adaptives Steuersystem nach Anspruch 7, wobei die Maschine ein Ottomotor ist und der bestimmte Steuerparameter der Zündverstellwinkel ist.

9. Adaptives Steuersystem nach einem der vorhergehenden Ansprüche, wobei der spezielle Steuerparameter ein Gemischsteuerparameter ist.

10. Verfahren zum Bestimmen einer Serie von Führungswerten für einen speziellen Steuerparameter einer Brennkraftmaschine, umfassend folgende Schritte: Bestimmen der Maschinendrehzahl, Bestimmen der Lastanforderung, der die Maschine unterliegt, Bestimmen eines Grundwerts oder einer Serie von Grundwerten für den speziellen Steuerparameter gemäß einem festen Programm, Bereitstellen eines Korrekturprogramms, in dem Korrekturwerte für den speziellen Steuerparameter als zweidimensionales Datenfeld als Funktion von Maschinendrehzahl und Lastanforderung gespeichert sind, Bilden eines berechneten Korrekturwerts für die Ist-Maschinendrehzahl und die Ist-Lastanforderung durch Multiplizieren jedes der Korrekturwerte, die in den die Ist-Maschinendrehzahl und die Ist-Lastanforderung umgebenden vier Datenfeldpunkten in der Drehzahl/Last-Ebene gespeichert sind, mit einem jeweiligen Bewertungsfaktor unter Bildung eines Produktwerts sowie Addieren der vier Produktwerte unter Bildung des berechneten Korrekturwerts, Addieren eines jeweiligen Grundwerts und eines jeweiligen berechneten Korrekturwerts unter Bildung eines Führungswerts für den speziellen Steuerparameter und Aktualisieren der in dem Korrekturprogramm gespeicherten Werte durch Bildung einer Serie von Fehlerwerten, die die Auswirkungen von aufeinanderfolgenden Führungswerten auf die Maschine bezeichnen, Multiplizieren jedes Fehlerwerts mit einem jeweiligen Bewertungsfaktor für jeden der die Ist-Maschinendrehzahl und die Ist-Lastanforderung umgebenden vier Datenfeldpunkte unter Bildung von vier Produktwerten für jede Serie von Fehlerwerten, und Nutzung der vier Produktwerte zum Aktualisieren der an den vier Datenfeldpunkten gespeicherten Korrekturwerte, wobei die zur Berechnung des berechneten Korrekturwerts und zum Aktualisieren der gespeicherten Werte verwendeten Bewertungsfaktoren bestimmt werden durch Bilden eines Hauptvierecks, dessen Eckpunkte auf den die Ist-Drehzahl und die Ist-Lastanforderung umgebenden vier Datenfeldpunkten liegen, Unterteilen des Hauptvierecks in vier Untervierecke durch die Ordinate und die Abszisse, die durch den Ist-Drehzahl- und Ist-Lastanforderungspunkt verlaufen, und Berechnen des Bewertungsfaktors für jeden Datenfeldpunkt in Abhängigkeit von dem Bereich des diagonal entgegengesetzten Untervierecks.

11. Verfahren nach Anspruch 10, ferner umfassend folgenden Schritt: Multiplizieren jedes Produktwerts mit einer Konstanten und Addieren des resultierenden Werts zu dem momentan an dem jeweiligen Datenfeldpunkt gespeicherten Korrekturwert beim Aktualisieren des Korrekturprogramms.

12. Verfahren nach Anspruch 10 oder 11, ferner umfassend folgende Schritte: Bestimmen einer Serie von Werten für die Steigung der Maschinenausgangsleistung relativ zu einem bestimmten Maschinensteuerparameter für die Ist-Maschinendrehzahl und die Ist-Lastanforderung, wobei der bestimmte und der spezielle Steuerparameter gleich oder verschieden sind, und Vergleichen jedes Steigungswerts mit einem vorbestimmten Wert unter Bildung der Serie von Fehlerwerten.

13. Verfahren nach einem der Ansprüche 10-12, dadurch gekennzeichnet, daß der bestimmte Steuerparameter ein Zündzeitpunktparameter ist.

14. Verfahren nach einem der Ansprüche 10-13, dadurch gekennzeichnet, daß der spezielle Steuerparameter ein Gemischsteuerparameter ist.

FIG.1.

FIG.2.

FIG.3.

FIG.4.

EP 0 234 715 B1

FIG.5.

LOAD INDEX +1

A 1        A 0

PREVAILING LOAD

A 3        A 2

LOAD INDEX

SPEED INDEX        PREVAILING      SPEED
                          SPEED       INDEX +1

# FIG.6.

SAFIRE

ENG SPEED
≥ 600 RPM — NO
200

YES

COMPUTE ELAPSED TIME
COUNTER = COUNTER
+ ELAPSED TIME — 202

SKK ANG =
SPK ANG BASE — 201

END

COUNTER +
ELAPSED TIME
> PERT
PERIOD — YES
203

NO

COUNTER = 0
HALF TIME = PERT PERIOD
DITHER = + 3·75° — 204

COUNTER +
(ELAPSED TIME)/2
≥ PERT
PERIOD/2 — NO
205

YES

DITHER
= + 3·75° — NO
206

YES

A

B

FIG.7a.

A                    B

DITHER = -3·75°
HALF TIME = COUNTER ⟶ 207

NUM FIRES =
(PERT PERIOD - COUNTER)/ELAPSED TIME ⟶ 208

PRED PERT PERIOD =
COUNTER +
NUM FIRES • ELAPSED TIME ⟶ 209

FIRE BEFORE LAST = LAST FIRE
LAST FIRE = THIS FIRE ⟶ 210

CALCULATE THIS FIRE ⟶ 211

C

FIG.7b.

C

EXAMINE FIRE BEFORE LAST — 212

REST OF NEG | FIRST POS | REST OF POS | FIRST NEG

CALL LOOK UP CORRECTION — 235

SPK ANG OPT =
SPK ANG BASE + CORRECTION — 236

SPK ANG =
SPK ANG OPT + DITHER — 239

FIG.7c.

END

REST OF NEG

NEG PERIOD =
NEG PERIOD + FIRE PERIOD — 213

NEG FIRES =
NEG FIRES + 1 — 214

RETURN

FIG.8.

```
        ┌─────────────┐
        │  FIRST  POS │
        └─────────────┘
               │
   ┌───────────────────────────┐
   │ NEG  SPEED  =             │──── 215
   │ CONST•NEG FIRES/ NEG PERIOD│
   └───────────────────────────┘
               │
   ┌───────────────────────────┐
   │ SIGNAL  FIRST  =          │──── 216
   │ NEG SPEED - POS SPEED     │
   └───────────────────────────┘
               │
   ┌───────────────────────────┐
   │ POS  FIRES = 1            │──── 217
   └───────────────────────────┘
               │
   ┌───────────────────────────┐
   │ POS  PERIOD  =            │──── 218
   │ FIRE  PERIOD              │
   └───────────────────────────┘
               │
        ┌─────────────┐
        │   RETURN    │
        └─────────────┘
```

FIG.9.

```
        ┌─────────────┐
        │ REST  OF POS│
        └─────────────┘
               │
   ┌───────────────────────────┐
   │ POS  PERIOD   =           │──── 220
   │ POS PERIOD + FIRE PERIOD  │
   └───────────────────────────┘
               │
   ┌───────────────────────────┐
   │ POS  FIRES  =             │──── 221
   │ POS  FIRES + 1            │
   └───────────────────────────┘
               │
        ┌─────────────┐
        │   RETURN    │
        └─────────────┘
```

FIG.10.

FIG. 11.

FIRST POS

SIGNAL FIRST =
POS PERIOD · NEG FIRES
−NEG PERIOD · POS FIRES —240

POS FIRES = 1 —217

POS PERIOD = FIRE PERIOD —218

RETURN

FIG.12.

FIRST NEG

SIGNAL SECOND =
NEG PERIOD · POS FIRES
−POS PERIOD · NEG FIRES —241

SLOPE =
SIGNAL SECOND−SIGNAL FIRST —227

CALL
MAP STORE —228

NEG FIRES = 1 —229

NEG PERIOD = FIRE PERIOD —230

RETURN

FIG.13.